(19) Europäisches Patentamt / European Patent Office / Office européen des brevets

(11) **EP 3 684 188 B1**

(12) **EUROPEAN PATENT SPECIFICATION**

(45) Date of publication and mention of the grant of the patent:
**07.01.2026 Bulletin 2026/02**

(21) Application number: **18752505.0**

(22) Date of filing: **16.08.2018**

(51) International Patent Classification (IPC):
**A23D 7/005** (2006.01)     **A23D 7/01** (2006.01)
**A23L 27/00** (2016.01)     **A23D 7/00** (2006.01)
**C11B 5/00** (2006.01)     **A23L 27/60** (2016.01)
**A23B 20/10** (2025.01)

(52) Cooperative Patent Classification (CPC):
(C-Sets available)
**A23D 7/00; A23B 20/10; A23D 7/0053;
A23D 7/011; A23L 27/60; A23L 27/80; C11B 5/00;
C11B 5/0007; C11B 5/0028; C11B 5/0085;
C11B 5/0092;** A23V 2250/02     (Cont.)

(86) International application number:
**PCT/EP2018/072168**

(87) International publication number:
**WO 2019/057407 (28.03.2019 Gazette 2019/13)**

(54) **PROCESS FOR THE MANUFACTURE OF AN O/W EMULSION COMPRISING CERTAIN FRUIT VINEGARS**

VERFAHREN ZUR HERSTELLUNG EINER O/W-EMULSION MIT BESTIMMTEN OBSTESSIGEN

PROCÉDÉ DE FABRICATION D'UNE ÉMULSION H/E COMPRENANT CERTAINS VINAIGRES DE FRUITS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.09.2017 EP 17192658
22.09.2017 EP 17192661**

(43) Date of publication of application:
**29.07.2020 Bulletin 2020/31**

(60) Divisional application:
**25210400.5**

(73) Proprietor: **Unilever IP Holdings B.V.
6708 WH Wageningen (NL)**

(72) Inventors:
• **ERMACORA, Alessia
3133 AT Vlaardingen (NL)**
• **SILVA PAES, Sabrina
3133 AT Vlaardingen (NL)**
• **VAN ADRICHEM, Linda, Johanna, Alida
3133 AT Vlaardingen (NL)**

(74) Representative: **Fijnvandraat, Arnoldus
Unilever Patent Group
Bronland 14
6708 WH Wageningen (NL)**

(56) References cited:
**WO-A1-2013/189709     US-A- 4 041 059**

• **SIVERTSEN TORE ET AL: "Vitamin E and selenium plasma concentrations in weanling pigs under field conditions in Norwegian pig herds", ACTA VETERINARIA SCANDINAVICA, BIOMED CENTRAL LTD, LO, vol. 49, no. 1, 3 January 2007 (2007-01-03), pages 1, XP021026674, ISSN: 1751-0147, DOI: 10.1186/1751-0147-49-1**

- LUECK KARL: "Karl's Green and Wax Bean Medley | Jabberwocky Stew", 13 October 2015 (2015-10-13), XP055426989, Retrieved from the Internet <URL:https://jabberwockystew.net/2015/07/13/karls-green-and-wax-bean-medley/#more-4114> [retrieved on 20171120]
- JAQUELINE PHAM: "How to Make a Vinaigrette - Pham Fatale", 6 May 2013 (2013-05-06), XP055427248, Retrieved from the Internet <URL:http://www.phamfatale.com/id_3849/title_How-to-Make-a-Vinaigrette/> [retrieved on 20171121]
- PLESSI M; MONZANI A; COPPINI D: "Quantitative determination of acids and derivatives in balsamic and other vinegars.", SCIENCES DES ALIMENTS, vol. 9, no. 1, 1989, pages 179 - 183, XP009501760, ISSN: 0240-8813
- YU KYUNG JANG ET AL: "Comparison of Traditional and Commercial Vinegars Based on Metabolite Profiling and Antioxidant Activity", JOURNAL OF MICROBIOLOGY AND BIOTECHNOLOGY., vol. 25, no. 2, 28 February 2015 (2015-02-28), KR, pages 217 - 226, XP055429491, ISSN: 1017-7825, DOI: 10.4014/jmb.1408.08021
- BAKIR SENA ET AL: "Investigating the antioxidant and antimicrobial activities of different vinegars", EUROPEAN FOOD RESEARCH AND TECHNOLOGY, SPRINGER BERLIN HEIDELBERG, BERLIN/HEIDELBERG, vol. 243, no. 12, 24 May 2017 (2017-05-24), pages 2083 - 2094, XP036351136, ISSN: 1438-2377, [retrieved on 20170524], DOI: 10.1007/S00217-017-2908-0
- YAMAGUCHI N ET AL: "ANTIOXIDATIVE ACTIVITIES OF HORSE RADISH AND MUSTARD POWDER (STUDIES ON NATURAL ANTIOXIDANT PART VI)", NIPPON SHOKUHIN KOGYO GAKKAISHI - JOURNAL OF FOOD SCIENCE AND TECHNO, NIPPON SHOKUHIN KAGAKUKOUGAKUKAI, JP, vol. 31, no. 2, 1984, pages 114 - 119, XP008029842, ISSN: 0029-0394
- YUN JUNG-HYUN ET AL: "Investigation into factors influencing antioxidant capacity of vinegars", APPLIED BIOLOGICAL CHEMISTRY, THE KOREAN SOCIETY FOR APPLIED BIOLOGICAL CHEMISTRY, SEOUL, vol. 59, no. 4, 23 March 2016 (2016-03-23), pages 495 - 509, XP035996209, ISSN: 2468-0834, [retrieved on 20160323], DOI: 10.1007/S13765-016-0185-4

(52) Cooperative Patent Classification (CPC): (Cont.)

C-Sets
A23V 2250/02, A23V 2002/00, A23V 2200/00, A23V 2200/02, A23V 2250/00, A23V 2250/022, A23V 2250/032, A23V 2250/042, A23V 2250/044, A23V 2250/06, A23V 2250/0608, A23V 2250/18, A23V 2250/5106

**Description**

**FIELD OF THE INVENTION**

The present invention relates to a composition comprising vegetable oil, a source of organic acids and one or more phenolic compounds.

**BACKGROUND TO THE INVENTION**

Vegetable oil comprising mono-unsaturated or poly-unsaturated fatty acids in food products are prone to oxidation during storage of the food product. This causes rancidity, and may lead to rejection of the food product by consumers. Therefore food products often contain antioxidants to prevent oxidation of the vegetable oil, in particular food products which are stored for a relatively long time. An additive which may commonly be used is EDTA (ethylene-diamine-tetra-acetic acid), which complexes metal ions which generally promote oxidation of the triglycerides in the vegetable oil. These metal ions may be present in the food product as constituent of common food ingredients. EDTA however can be regarded to be chemical and artificial by consumers, therefore there is a need for alternatives which are natural. Within the food industry an increasing effort is made to remove artificial ingredients from food products and to replace them with natural alternatives. Owing to its effectiveness, reasonable cost, and lack of viable alternatives, however, EDTA has so far been one of the more difficult artificial ingredients to replace. Many compounds are known for their antioxidative properties, however not all compounds are sufficiently effective.

WO 2013/189709 A1 relates to mayonnaise which does not contain EDTA, and which contains reduced grape juice. Additionally, the mayonnaise contains a source of acetic acid, which is selected from the group of wine vinegar, sherry vinegar, spirit vinegar, rice vinegar, apple vinegar, malt vinegar and combinations thereof. Filtered balsamico vinegar is suggested as a source of acetic acid, which involves the industrially inefficient and expensive process step of filtration. Reduced oxidation of the oil is caused by the incorporation of the reduced grape juice.

WO 2017/001154 A1 *discloses compositions containing caramel and phenolic compounds.*

WO 2007/096444 A1 discloses a mayonnaise-type sauce, the composition of which includes only buttermilk by way of an emulsifier, and may also contain white wine vinegar.

EP 1 336 340 A1 discloses a mayonnaise sauce and its manufacturing process, said mayonnaise having extra virgin olive oil as its main oily ingredient and olive oil as its secondary oily ingredient.

JP2004073043 A2 discloses a dressing which contains 'umeboshi vinegar'. The umeboshi vinegar has the effect that it contains acids which have antibacterial properties. Umeboshi vinegar is a salty and sour condiment, which is the byproduct from making umeboshi. Umeboshi are pickled and dried plums, from the species *Prunus mume.*

D. Tagliazucchi et al. (European Food Research and Technology, 227(3), 2008, p.835-843) describes the antioxidant activity of traditional balsamic vinegar, due to compounds synthesized during cooking of must.

CN 101708062 relates to the use of modified tea polyphenols in fatty foods, to improve antioxidant activity.

**SUMMARY OF THE INVENTION**

Generally, an anti-oxidant is required to prevent oxidation of the triglycerides in vegetable oil in food products, in particular in products which are often stored for a long time. Consumers are more and more interested in food products which are free from ingredients which are perceived to be chemical or artificial. Hence, one of the objectives of the present invention is to provide an antioxidant system which can be regarded to be a natural or known ingredient, and is not considered to be an artificial chemical by the consumer. Another objective of the present invention is to provide food products containing vegetable oil containing such antioxidant system, and which are free or nearly free from EDTA. Moreover, oxidation of the triglycerides in the vegetable oil in such food products during storage should nevertheless be as low as possible, therefore it is another objective of the present invention to provide food products having that property. The food product may contain an antioxidant system, and such system should not negatively influence the food products. Moreover the colour and taste profile of the antioxidant system should fit to the food product in which it is used. For example, the antioxidant system should not give a dark colour to a light coloured food product, as the food product would become too dark. Moreover, the taste profile should fit to the food product in which it is used. The product is preferably produced in an industrially convenient and efficient manner, without inefficient or costly process steps.

Therefore it is an objective of the present invention to provide an antioxidant system that does not give an undesired colour, and neither an undesired taste, to a food composition. Additionally, it should be a natural compound and/or common food ingredient, and fitting to the food composition with regard to taste and colour. More in particular it is an objective of the present invention to provide an oil-in-water emulsion like a mayonnaise or a salad dressing which is free or nearly free from EDTA, and that contains an antioxidant system that does not give an undesired colour and taste to the emulsion, and that is regarded to be a natural ingredient by the consumer.

We have found a solution to these problems.

The invention provides a process for manufacturing a composition comprising water, a source of organic acids and vegetable oil, the vegetable oil comprising mono-unsaturated and/or polyunsaturated fatty acids, the organic acids comprising acetic acid and one or more organic acids other than acetic acids; the process comprising:

(i) selecting the source of organic acids such that:

the weight ratio of one or more organic acids other than acetic acid to total organic acids in the source of organic acids ranges from 0.5% to 60%,
the weight ratio of one or more amino acids to total organic acids in the source of organic acid ranges from 0.05% to 20%, and
the source of organic acid has an absorbance at a wavelength of 420 nm ranging from 0.01 to 3,
wherein the source of organic acids does not originate from grape, and
wherein the source of organic acids comprises one or more vinegars selected from cherry vinegar, plum vinegar, tomato vinegar, apricot vinegar, apple cider vinegar, mango vinegar, raspberry vinegar, and pear vinegar;and

(ii) providing the composition in the form of an oil-in-water emulsion, through high-shear emulsification sufficient to provide the oil droplets in the emulsion with a surface weighted mean diameter D3.2 of less than 20 micrometre; and

wherein the concentration of the vegetable oil ranges from 5% to 85% by weight of the composition;
wherein the composition has a total titratable acidity ranging from 0.03% to 3% by weight expressed as acetic acid;
wherein the composition comprises one or more organic acids other than acetic acid at a concentration ranging from 0.0007% to 0.7% by weight;
wherein the composition has a pH ranging from 2.5 to 5;
wherein the composition comprises one or more amino acids at a concentration ranging from 0.0001 % to 0.3% by weight of the composition;
wherein the composition comprises one or more phenolic compounds at a concentration ranging from 0.00007% to 0.5% by weight of the composition expressed as gallic acid equivalents;
wherein quantitative analysis of organic acids and amino acids is carried out spectroscopically as set forth in the description,
wherein gallic acid equivalents is determined using the Folin-Ciocalteu assay as set forth in the description;
wherein absorbance at 420 nm is determined using UV-vis analysis as set forth in the description and
wherein D3,2 is defined as referred to in the description.

## DETAILED DESCRIPTION OF THE INVENTION

All percentages, unless otherwise stated, refer to the percentage by weight (wt%).

"Weight ratio" means that the concentration of a first (class of) compound(s) is divided by the concentration of a second (class of) compound(s), and multiplied by 100 in order to arrive at a percentage.

"Spoonable" means that a composition is semi-solid but not free-flowing on a time scale typical for eating a meal, meaning not free-flowing within a time period of an hour. A sample of such substance is able to be dipped with a spoon from a container containing the composition.

Except in the operating and comparative examples, or where otherwise explicitly indicated, all numbers in this description indicating amounts or ratios of material or conditions of reaction, physical properties of materials and/or use are to be understood as modified by the word "about".

The invention provides a process for manufacture of a composition as defined in the first aspect above. The total amount of acid is determined by titration with sodium hydroxide (NaOH), and expressed as titratable acidity. This is called the titratable acidity, expressed as acetic acid (HAc), which is determined using the following formula.

$$HAc\% = 100\% \cdot (V \cdot t \cdot M)/m \qquad (1)$$

wherein:

V: volume NaOH solution added (mL)
t: concentration NaOH solution (mol/L)
M: molecular weight HAc (60.052 g/mol)

m:     mass (g) product which has been titrated

The term "oil" as used herein refers to lipids selected from triglycerides, diglycerides, monoglycerides and combinations thereof. Preferably the oil in the context of this invention comprises at least 90 wt% of triglycerides, more preferably at least 95 wt%. Preferably the oil contains less than 20 wt% of solid oil at 5°C, preferably less than 10 wt% solid oil. More preferred the oil is free from solid oil at 5°C. Most preferred the oil is liquid at 5°C. Preferred oils for use in the context of this invention are vegetable oils which are liquid at 5°C.

Preferably the oil comprises sunflower oil, rapeseed oil, olive oil, soybean oil, and combinations of these oils. Therefore preferably the vegetable oil is an edible oil. The mono-unsaturated fatty acids as comprised in the oil preferably comprise oleic acid. The poly-unsaturated fatty acids as comprised in the oil preferably comprise linoleic acid and linolenic acid. Preferably the amount of extra virgin olive oil in the composition prepared according to the process of the invention is maximally 40% by weight of the composition. More preferably the amount of extra virgin olive oil in the composition prepared according to the process of the invention is maximally 20% by weight of the composition, more preferred maximally 15% by weight. Preferably the amount of olive oil in the composition prepared according to the process of the invention is maximally 20% by weight of the composition, more preferred maximally 15% by weight more preferred maximally 10% by weight.

Preferably the concentration of oil ranges from 15% to 85% by weight of the composition.

Preferably the amount of oil is at least 20% by weight, preferably at least 25% by weight.

Preferably the concentration of vegetable oil is maximally 78% by weight, preferably maximally 70% by weight, preferably maximally 65%. Any combination of ranges using these mentioned end points are considered to be part of the invention as well.

The composition prepared according to the process of the invention is present in the form of an oil-in-water emulsion.

Preferably the composition is an edible emulsion. Examples of oil-in-water emulsions encompassed by the present invention include mayonnaise, dressings, salad dressings, and emulsified sauces. Preferably, the oil-in-water emulsion is a mayonnaise, or a dressing or a salad dressing, most preferably a salad dressing or a mayonnaise. Generally a mayonnaise is spoonable, while a salad dressing is pourable.

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. Also mayonnaise-like products having oil levels lower than defined in a standard of identity or not containing egg yolk can be considered to be mayonnaises. These kind of products may contain thickeners like starch to stabilise the aqueous phase. Mayonnaises may vary in colour, and are generally white, cream-coloured, or pale yellow. The texture may range from of light creamy to thick, and generally mayonnaise is spoonable. In the context of the present invention "mayonnaise" includes emulsions with vegetable oil levels ranging from 5% to 85% by weight of the product. Mayonnaises in the context of the present invention do not necessarily need to conform to a standard of identity in any country.

The composition prepared according to the process of the invention is an oil-in-water emulsion, thus the composition comprises an oil-in-water emulsifier. The emulsifier serves to disperse oil droplets in the continuous aqueous phase. Preferably such oil-in-water emulsion comprises an oil-in-water emulsifier originating from egg, preferably from egg yolk. Preferably the composition comprises egg yolk as an ingredient which also provides the water-in-oil emulsifier. The presence of egg yolk may be beneficial for taste, emulsification and/or stability of the oil droplets in the composition prepared according to the process of the invention. Egg yolk contains phospholipids, which act as emulsifier for the oil droplets. Preferably the concentration of egg yolk in the composition prepared according to the process of the invention ranges from 1% to 8% by weight of the emulsion, more preferred from 2% to 6% by weight of the emulsion. The egg yolk may be added as egg yolk component, meaning largely without egg white. Alternatively, the composition may also contain whole egg, containing both egg white and egg yolk. The total amount of egg yolk in the composition prepared according to the process of the invention includes egg yolk that may be present as part of whole egg. Preferably the concentration of phospholipids originating from egg yolk ranges from 0.05% to 1% by weight, preferably from 0.1% to 0.8% by weight of the preferred oil-in-water emulsion.

Alternatively, the preferred oil-in-water emulsion comprises an oil-in-water emulsifier that does not originate from egg or egg yolk. Preferably such oil-in-water emulsifier is from plant or botanical origin, and may be used native or modified. This way a vegan oil-in-water emulsifier can be created without ingredients from animal origin. Preferably the oil-in-water emulsifier comprises starch sodium octenyl succinate (European food additive E1450). This emulsifier is available commercially as for example N-creamer 46, ex Ingredion Inc. (Westchester, IL, USA). Other preferred emulsifiers from botanical origin are legume proteins.

The composition prepared according to the process of the invention has a pH ranging from 2.5 to 5, preferably ranging from 2.5 to 4. The source of organic acids which is comprised in the composition prepared according to the process of the invention, has a specific composition, as defined herein. The composition prepared according to the process of the invention has a total titratable acidity ranging from 0.03% to 3% by weight expressed as acetic acid, preferably from 0.05% to 2% by weight, preferably from 0.1% to 1% by weight. Preferably, the source of organic acids comprises acetic acid and additionally one or more organic acids selected from citric acid, malic acid, lactic acid, and succinic acid. The acids as described in this specification include their corresponding salts which are in equilibrium with the acids (acetates, citrates, malates, lactates, succinates, etc.). In case a concentration of an acid is provided, then this concentration refers to total concentration of the acid and its corresponding salt. Preferably the composition comprises one or more organic acids other than acetic acid at a concentration ranging from 0.0011% to 0.65% by weight of the composition.

The composition prepared according to the process of the invention comprises one or more amino acids at a concentration ranging from 0.0001% to 0.3% by weight of the composition. This way the composition can be distinguished from existing compositions. At least part of these amino acids are present in the source of organic acids, before mixing that source with the other ingredients of the composition prepared according to the process of the invention. In addition, they may also be added to the composition independently from the source of organic acids. Preferably the composition comprises one or more amino acids at a concentration ranging from 0.0005% to 0.2% by weight of the composition. In the context of the present invention, "amino acids" refers to "free amino acids", meaning amino acids not bound in a protein or a peptide. Preferred amino acids comprise alanine, asparagine, aspartic acid, proline, glutamic acid, leucine, isoleucine, valine, and glycine. The term "amino acid" may refer to an amino acid and its corresponding salts, which may be in equilibrium with the amino acid.

The composition prepared according to the process of the invention comprises phenolic compounds at a concentration ranging from 0.00007% to 0.5% by weight of the composition expressed as gallic acid equivalents. Preferably these phenolic compounds are naturally present in the source of organic acids, but they may also be added to the composition independently from the source of organic acids. Preferably the composition comprises one or more phenolic compounds at a concentration ranging from 0.00015% to 0.07% by weight expressed as gallic acid equivalents.

A common method to determine the phenolic compounds concentration of a sample, is the concentration in "gallic acid equivalents" (GAE). Whenever reference is made herein to "gallic acid equivalents" what is meant is the amount of gallic acid equivalents as determined by the Folin-Ciocalteu assay. Gallic acid (3,4,5-trihydroxybenzoic acid) is the phenolic acid that is used as a standard for determining the phenol content of various analyses by the Folin-Ciocalteu assay (see V.L. Singleton et al., Analysis of total phenols and other oxidation substrates and antioxidants by means of Folin-Ciocalteu reagent, Methods in Enzymology 299, 152-178, 1999).

The advantage of the composition prepared according to the process of the invention is that the oxidation of the vegetable oil is strongly reduced as compared to compositions without the source of organic acids as defined herein. Therefore the amount of EDTA which commonly is present in compositions containing vegetable oil can be strongly reduced. This way a food composition is presented to the consumer, which does not contain compounds which are often regarded to be chemical or artificial by that consumer. Hence, preferably the composition comprises EDTA at a concentration lower than 0.007% by weight, preferably lower than 0.005% by weight, preferably lower than 0.002% by weight, preferably lower than 0.001% by weight of the composition. Most preferred EDTA is absent from the composition.

Preferably, the composition comprises mustard seed bran, preferably at a concentration ranging from 0.05% to 4% by weight of the composition, preferably ranging from 0.075% to 2.75% by weight, more preferred from 0.1% to 2% by weight. The mustard seed preferably comprises yellow or oriental mustard seed. The mustard bran is obtained from the whole mustard seeds. Preferably the mustard bran is treated by dispersing in water and heating for preferably 10 minutes at 90°C in order to make it suitable to be incorporated into the composition prepared according to the process of the invention. After this heat treatment the dispersion is cooled, and mixed with the aqueous phase of the emulsion, before the aqueous phase is mixed with the oil for emulsification. The advantage of the mustard bran is that the oxidation of the vegetable oil is even stronger reduced than using the source of organic acids only. Additionally, the mustard bran provides structure to the composition, as it acts as a binder or thickener for the water in the composition. Also fractions of mustard bran may be incorporated into the compositions prepared according to the process of the invention, preferably mustard bran seed mucilage, more preferred yellow mustard seed bran mucilage. Preferably yellow mustard bran mucilage is incorporated into the composition at a concentration ranging from 0.05% to 4% by weight of the composition, preferably ranging from 0.075% to 2.75% by weight, more preferred from 0.1% to 2% by weight.

## Source of Organic Acids

The source of organic acids which is comprised in the composition prepared according to the process of the invention is essential in order to achieve the benefit of the reduced oxidation of the vegetable oil. The source of organic acids additionally may provide taste, flavour, and odour to the composition prepared according to the process of the invention.

The dry matter content of the source of organic acids ranges from 0.005% to 99% by weight of the source of organic acid. Preferably the dry matter content of the source of organic acids ranges from 0.1% to 50% by weight of the source of organic acid. Preferably the dry matter content of the source of organic acids is at least 3% by weight.

As indicated herein before, the composition prepared according to the process of the invention comprises one or more organic acids other than acetic acid. Preferably the weight ratio of one or more organic acids other than acetic acid to total organic acids in the source of organic acids ranges from 1% to 30%, preferably from 1.5% to 25%, more preferred from 2% to 20%. The organic acids other than acetic acid are preferably at least partly provided to the composition by way of being a constituent of the source of organic acids. Preferably the source of organic acids comprises citric acid at an amount of maximally 50% by weight of the total amount of organic acids in the source of organic acids. Preferably the source of organic acids comprises citric acid and malic acid and the weight ratio between citric acid and malic acid to total organic acids in the source of organic acids ranges from 0.2% to 50%. Preferably the weight ratio between citric acid and malic acid to total organic acids in the source of organic acids ranges from 1 to 35%, more preferred from 1.5% to 15%, most preferred from 2% to 10%.

Additionally, the composition prepared according to the process of the invention comprises one or more amino acids. The weight ratio of one or more amino acid to total organic acids in the source of organic acid ranges from 0.05% to 20%. Preferably the weight ratio of one or more amino acids to total organic acids in the source of organic acid ranges from 0.2% to 18%, preferably from 0.5% to 15%. A preferred amino acid present in the source of organic acids is asparagine. Preferably the weight ratio of asparagine to total organic acids in the source of organic acid ranges from 0.2% to 10%.

The source of organic acid has an absorbance at a wavelength of 420 nm ranging from 0.01 to 3. This limits the darkness of the source of organic acids: if they are too dark, then the absorbance at 420 nm will be higher than 3. For example, a balsamic vinegar made from grapes generally has an absorbance at 420 nm which is higher than 3. Therefore this limit effectively excludes dark coloured balsamic vinegars prepared from grape. Preferably the source of organic acids has an absorbance at a wavelength of 280 nm ranging from 1 to 3.

The source of organic acids comprises a natural vinegar.

The composition comprises as the source of organic acids one or more vinegars. The preparation processes are generally similar to processes normally used in the vinegar industry. The source of organic acids comprises one or more vinegars selected from cherry vinegar, plum vinegar, tomato vinegar, apple cider vinegar, mango vinegar, raspberry vinegar, apricot vinegar, and pear vinegar. A preferred vinegar as source of organic acids is apple cider vinegar, having a composition as described herein. A particular preferred source of organic acids is balsamic apple cider vinegar, for example as supplied by Vinagrerias Riojanas (Logroño, La Rioja, Spain). The source of organic acids may also be a combination of a vinegar, supplemented with one or more pure organic acids, or a combination of one of these preferred vinegars with spirit vinegar.

The source of organic acids does not originate from grape. Grape is the fruit or berry of plants of the genus *Vitis,* in particular from the species *Vitis vinifera.* Preferably the source of organic acids does not originate from Asian rice (*Oryza sativa*) or African rice (*Oryza glaberrima*) either.

Preferably the source of organic acids does not originate from fruit from the species *Prunus mume.* Preferably the source of organic acids does not comprise umeboshi vinegar.

The source of organic acids may contain salts, like for example kitchen salt (NaCl), although high salt levels are not preferred. The concentration of NaCl preferably is lower than 10% by weight, more preferably less than 5% by weight, more preferably less than 3% by weight of the source of organic acids. Most preferably the NaCl concentration in the source of organic acid is the NaCl concentration which may be naturally present in the source of organic acid, meaning no added NaCl to the source of organic acid.

The composition prepared according to the process of the invention is an oil-in-water emulsion wherein the oil droplets are have a surface weighted mean diameter D3,2 of less than 20 micrometer, preferably less than 10 micrometer (see M. Alderliesten, Particle & Particle Systems Characterization 8 (1991) 237-241; for definitions of average diameters).

The compositions prepared according to the process of the invention are prepared by any method commonly known for preparing oil-in-water emulsions, which involve high shear emulsification.

**DESCRIPTION OF FIGURES**

*Figure* 1: Oxygen concentration in headspace during storage trial of mayonnaises at 50°C, from example 1; legend:

| | |
|---|---|
| •: | mayonnaise #5 (spirit vinegar) |
| ▪ : | mayonnaise #4 (white wine vinegar) |
| +: | mayonnaise #3 (mango vinegar) |
| ▲: | mayonnaise #2 (raspberry vinegar) |

x:        mayonnaise #1 (tomato vinegar)

*Figure 2:* Oxygen concentration in headspace during storage trial of mayonnaises at 50°C, from example 2; legend:

•:        mayonnaise #14 (spirit vinegar)
:        mayonnaise #12 (apple cider vinegar 2)
♦:        mayonnaise #13 (apple cider vinegar 3)
▲:        mayonnaise #11 (apple cider vinegar 1)

*Figure 3:* Oxygen concentration in headspace during storage trial of mayonnaises at 50°C, from example 3; legend:

•:        mayonnaise #25 (acetic acid solution)
■ :        mayonnaise #24 (apple cider vinegar 1 at 0.5%)
♦:        mayonnaise #23 (apple cider vinegar 1 at 1%)
▲:        mayonnaise #22 (apple cider vinegar 1 at 2%)
x:        mayonnaise #21 (apple cider vinegar 1 at 3%)

*Figure 4:* Oxygen concentration in headspace during storage trial of mayonnaises at 50°C, from example 4; legend:

•:        mayonnaise #33 (spirit vinegar)
♦:        mayonnaise #32 (raspberry vinegar)
■ :        mayonnaise #31 (cherry vinegar)

*Figure 5:* Oxygen concentration in headspace during storage trial of mayonnaises at 50°C, from example 5; legend:

•:        mayonnaise #42 (spirit vinegar)
♦:        mayonnaise #41 (raspberry vinegar)

*Figure 6:* Oxygen concentration in headspace during storage trial of mayonnaises at 50°C, from example 6; legend:

•:        mayonnaise #53 (spirit vinegar)
♦:        mayonnaise #52 (plum vinegar)
▲:        mayonnaise #51 (plum vinegar and mustard bran)

*Figure* 7: Oxygen concentration in headspace during storage trial of mayonnaises at 50°C, from example 7; legend:

•:        mayonnaise #61 (spirit vinegar)
▲:        mayonnaise #62 (plum vinegar and yellow mustard bran)
■ :        mayonnaise #63 (plum vinegar and oriental mustard bran)
♦:        mayonnaise #64 (plum vinegar and yellow mustard bran mucilage)

*Figure 8:* Oxygen concentration in headspace during storage trial of mayonnaises at 50°C, from example 8; legend:

•:        mayonnaise #71 (spirit vinegar)
▲:        mayonnaise #72 (cherry vinegar and yellow mustard bran)
■ :        mayonnaise #73 (raspberry vinegar and yellow mustard bran)

**EXAMPLES**

The invention is illustrated with the following non-limiting examples.

**Raw Materials**

- Water: demineralised water.
- Rapeseed oil ex Cargill (Amsterdam, The Netherlands).
- Sugar: sucrose white sugar W4 ex Suiker Unie (Oud Gastel, Netherlands).

- Salt: NaCl suprasel ex Akzo Nobel (Amersfoort, Netherlands).
- EDTA: Ethylenediaminetetraacetic acid, calcium disodium complex, dehydrate; Dissolvine E-CA-10 ex Akzo Nobel (Amersfoort, Netherlands).
- Egg yolk: ex Bouwhuis Enthoven (Raalte, the Netherlands); contains 92% egg yolk and 8% kitchen salt.
- Whole egg: ex Bouwhuis Enthoven (Raalte, the Netherlands).
- N-creamer: N-creamer 46, starch sodium octenyl succinate ex Ingredion Inc.
- Starch: Thermflo ex Ingredion Inc. (Westchester, Illinois, USA).
- Vinegar spirit 12% ex Kühne (Hamburg, Germany)
- Raspberry vinegar and Mango vinegar: Foodelicious, Rotterdam, the Netherlands.
- White wine vinegar: Kühne, Hamburg, Germany.
- Apple cider vinegar 1: Balsamic apple vinegar ex Vinagrerias Riojanas (Logroño, La Rioja, Spain).
- Apple cider vinegar 2: Amora Cider Vinegar ex Unilever France (Paris, France).
- Apple cider vinegar 3: Apple cider vinegar ex Wijnimport Van der Steen BV, Vught, the Netherlands.
- Acetic acid solution 50%: Prepared in house, consisting of a 50:50 v/v% solution of acetic acid glacial (VWR, Amsterdam, the Netherlands) and demineralised water.
- Cherry vinegar, Plum vinegar, and Tomato vinegar: Pödör Öle und Essige, Vertrieb über Arteriomed GmbH, Grevenbroich, Germany.
- Yellow mustard bran: product code no. 412, G.S. Dunn (Ontario, Canada).
- Oriental mustard bran: product code 403, G.S. Dunn (Ontario, Canada).
- Yellow mustard bran mucilage: prepared by dispersing 10% w/w yellow mustard bran in water, and heating this for 10 minutes at 90°C. After the treatment, the dispersion is cooled to room temperature and centrifuged for 30 minutes at 9,000 g. The aqueous layer (having a mucilage content of about 10% w/w) is separated from the residue and used in the preparation of dressings/mayonnaise.

## Methods - Accelerated shelf-life test to follow lipid oxidation.

Vegetable oil is subjected to conditions which promote oxidation, without requiring the typical shelf life of 4 to 9 months of mayonnaise. Oxidation experiments are carried out during a period up to generally about 30 days, in some experiments up to 80 days, to follow the oxidation of the vegetable oil in oil-in-water emulsions.

Emulsion samples with various compositions are prepared (as described in the examples below) and 1g of each sample is filled in a capped glass vial (20mL volume) and kept in a temperature controlled oven at 50°C.

The oxidation of triglycerides occurs in several steps, in which the first step is the most important. This first step is the lag phase, which is the phase where there is not much oxidation, and after this phase the oxidation starts to accelerate. This means that the amount of oxidation products rapidly starts to increase. The longer the lag phase, the slower the oxidation process, and the better the result.

*Oxygen concentration in headspace*

To follow oxidation of fatty acids in emulsions in the experiments, the oxygen concentration is measured in the headspace of closed jars in which emulsions are stored to follow oxidation. The lower this concentration, the more oxygen is consumed for oxidation processes. The oxygen content is determined by taking a sample of gas from the headspace with a needle through a septum in the closed lid of the jar. The oxygen concentration in the sample is determined by gas analyser.

## Methods - Organic acids and Amino acids

Quantitative analysis of organic acids and amino acids in various sources of organic acids was carried out spectroscopically ($^1$H-NMR).

200 mg of sample (vinegar) was weighed and added with 3 ml of $D_2O$. 600 $\mu$l of such sample mixture was added with 100 $\mu$l of CSI (Chemical Shift Indicator) solution (consisting of 10.90 mg of 3-(trimethylsilyl)propionic-2,2,3,3-$d_4$ acid, sodium salt, 2.30 mg of difluorotrimethyl-silanyl-methyl)phosphonic acid and 30 ml of $D_2O$), 100 $\mu$l of EDTA-$d_{12}$ solution, and 300 $\mu$l of 0.2 M phosphate buffer. The sample mixture was homogenised and centrifuged at 15000 g for 10 minutes. 650 $\mu$l of the supernatant was transferred into 5-mm NMR tubes for analysis.

1D $^1$H NMR spectra were recorded with a noesygppr1d pulse sequence on a Bruker Avance III 600 NMR spectrometer, equipped with a 5-mm cryo-probe. The probe was tuned to detect $^1$H resonances at 600.25 MHz. The internal probe temperature was set to 298K. 128 scans were collected in 57K data points with a relaxation delay of 10 seconds, an acquisition time of 4 seconds and a mixing time of 100 ms. Low power water suppression (16 Hz) was applied for 0.99 seconds. The data were processed in Topspin software version 3.5 pl 1 (Bruker BioSpin GmbH, Rheinstetten, Germany). An exponential window function was applied to the free induction decay (FID) with a line-broadening factor of 0.15 Hz prior to the Fourier transformation. Manual phase correction and baseline correction was applied to all spectra. The spectra were referenced against the methyl signal of 3-(trimethylsilyl)propionic-2,2,3,3-$d_4$ acid, sodium salt ($\square$ 0.0 ppm).

**Methods - Phenolic compounds**

The concentration of phenolic compounds is expressed as "gallic acid equivalents" (GAE), and determined using the Folin-Ciocalteu assay (see V.L. Singleton et al., Analysis of total phenols and other oxidation substrates and antioxidants by means of Folin-Ciocalteu reagent, Methods in Enzymology 299, 152-178, 1999).

**Methods - Absorbance at 280 nm and 420 nm**

Samples of sources of organic acids were first diluted with demineralized water (1:1 v/v) and then transferred into a micro well plate for UV-VIS analysis (UV-star-96 VWR 736-0231). Absorbance spectra were recorded at 280 nm (typical for compounds with known antioxidant activity such as polyphenols and Maillard reaction intermediates) and 420 nm (typical for melanoidins and other coloured compounds).

**Example** 1 - **Mayonnaises containing different sources of organic acids**

Mayonnaises were prepared according to the following recipes containing different vinegars as sources of organic acids. Additionally, acetic acid solution was added, so that the compositions had the same pH. The source of organic acid in this example are mixtures of a vinegar and an acetic acid solution.

*Table 1 Compositions of mayonnaises containing different sources of organic acids.*

| Ingredient | Concentration [wt%] | | | | |
|---|---|---|---|---|---|
| | #1 | #2 | #3 | #4 | #5 |
| Water | 14.64 | 14.51 | 14.52 | 14.94 | 15.05 |
| Oil (rapeseed) | 75 | 75 | 75 | 75 | 75 |
| Sugar | 1.3 | 1.3 | 1.3 | 1.3 | 1.3 |
| Salt | 1.2 | 1.2 | 1.2 | 1.2 | 1.2 |
| Egg yolk | 4.2 | 4.2 | 4.2 | 4.2 | 4.2 |
| Flavours | 0.24 | 0.24 | 0.24 | 0.24 | 0.24 |
| Tomato vinegar | 3 | 0 | 0 | 0 | 0 |
| Raspberry vinegar | 0 | 3 | 0 | 0 | 0 |
| Mango vinegar | 0 | 0 | 3 | 0 | 0 |
| White wine vinegar | 0 | 0 | 0 | 3 | 0 |
| Spirit vinegar | 0 | 0 | 0 | 0 | 3 |
| Acetic acid solution (50% w/w) | 0.42 | 0.55 | 0.54 | 0.12 | 0.01 |

The mayonnaises were prepared at bench scale (0.25 kg emulsion), following a 2-step procedure. In the first step, the mayonnaise aqueous phase was prepared by mixing water, egg, sucrose and salt in an Esco-Labor processing plant type EL10 (Riehen, Switzerland). Subsequently the oil was slowly added to the aqueous phase, under stirring conditions. After the oil had been homogenised into a coarse emulsion, the latter was pumped into a Labor-Pilot 2000/4 colloid mill (IKA Labor, Staufen, Germany), equipped with module MK. The speed of the colloid mill was set to 6000 rpm. In the second step, the fine emulsion obtained as just described was divided into a number of aliquots of 250 g and each aliquot was added with a specific source of organic acids (according to formulation) and homogenised with a hand mixer. The compositions had a pH of 3.8.

These mayonnaises and sources of organic acids were analysed for the attributes in the following two tables. The vinegars are specified by a number of parameters as defined in claim 1 (e.g. ratios of acids). The mayonnaises are defined by the concentration of a number of compounds in the composition, in order to characterize these compositions to achieve the required effects.

*Table 2 Analytical parameters of combined source of organic acids (vinegar and acetic acid solution) used in mayonnaises from Table 1.*

| Sample (Combined sources of organic acids) | Ratio organic acids other than acetic acid to total organic acids [%] | Ratio amino acids to total organic acids [%] | Absorbance at 420nm [-] |
|---|---|---|---|
| Tomato vinegar + acetic acid solution | 2.88 | 0.97 | 0.10 |
| Raspberry vinegar + acetic acid solution | 9.38 | 0.59 | 0.68 |
| Mango vinegar + acetic acid solution | 1.51 | 0.32 | 0.23 |
| White wine vinegar + acetic acid solution | 0.73 | 0.03 | 0.04 |
| Spirit vinegar + acetic acid solution | 0.005 | 0.00 | 0.03 |

*Table 3 Concentrations of compounds in mayonnaises from Table 1.*

| Sample | Organic acids other than acetic acid [wt%] | Amino acids [wt%] | Phenolic compounds [GAE %] |
|---|---|---|---|
| Mayonnaise #1 | 0.0097 | 0.0032 | 0.00051 |
| Mayonnaise #2 | 0.033 | 0.0021 | 0.0042 |
| Mayonnaise #3 | 0.0050 | 0.0011 | 0.00071 |
| Mayonnaise #4 | 0.0024 | 0.00009 | 0.00020 |
| Mayonnaise #5 | 0.00003 | 0.00000 | 0.00004 |

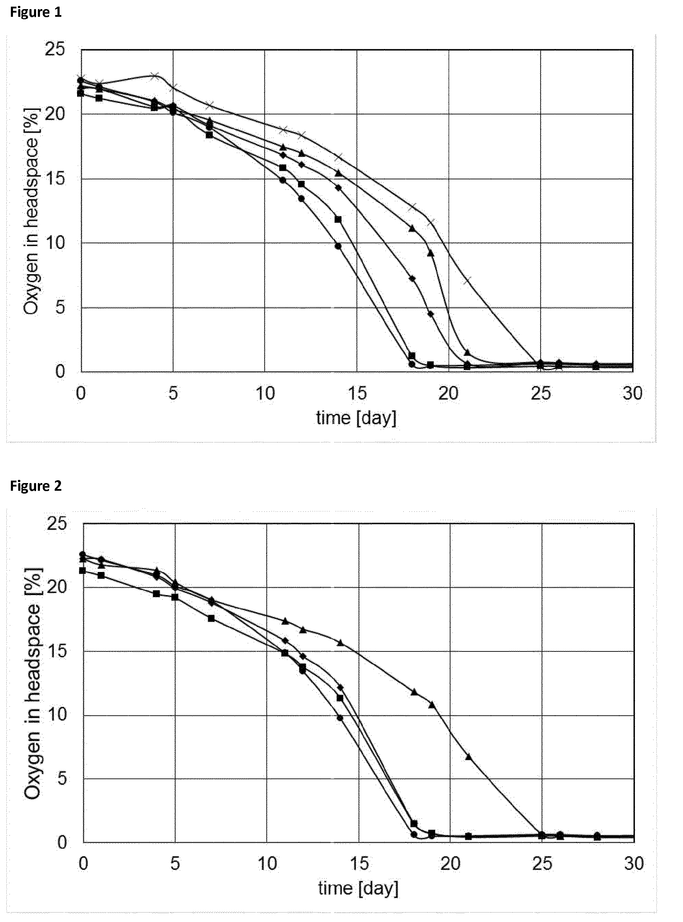

Oxygen concentration in headspace during storage trial of mayonnaises at 50°C was determined, to see the influence of the type of vinegar (see Figure 1). Mayonnaise #5 (•, containing spirit vinegar) shows the most rapid decrease of oxygen concentration in the headspace, indicating that oxidation of oil is most rapid in this mayonnaise. The mayonnaise #1 with tomato vinegar (x) shows the slowest decrease of oxygen concentration, indicating that this mayonnaise has the slowest oxidation.

The mayonnaises containing the vinegars conforming to the requirements as specified herein for the composition as well as the source of organic acids (tomato, raspberry, and mango vinegar) show a slower oxidation that the mayonnaises containing spirit vinegar or white wine vinegar.

## Example 2 - Mayonnaises containing different apple cider vinegars

Mayonnaises were prepared according to the following recipes, containing various types of apple cider vinegar or spirit vinegar as sources of organic acids. Additionally, acetic acid solution was added, so that the compositions had the same pH (3.8). The source of organic acid in this example is a mixture of an apple cider vinegar or spirit vinegar and an acetic acid solution.

*Table 4 Compositions of mayonnaises containing different apple cider vinegars.*

| Ingredient | Concentration [wt%] | | | |
|---|---|---|---|---|
| | #11 | #12 | #13 | #14 |
| Water | 14.62 | 14.64 | 14.65 | 15.05 |
| Oil (rapeseed) | 75 | 75 | 75 | 75 |
| Sugar | 1.3 | 1.3 | 1.3 | 1.3 |
| Salt | 1.2 | 1.2 | 1.2 | 1.2 |
| Egg yolk | 4.2 | 4.2 | 4.2 | 4.2 |
| Flavours | 0.2 | 0.2 | 0.2 | 0.2 |
| Apple cider vinegar 1 | 3 | 0 | 0 | 0 |
| Apple cider vinegar 2 | 0 | 3 | 0 | 0 |
| Apple cider vinegar 3 | 0 | 0 | 3 | 0 |

(continued)

| Ingredient | Concentration [wt%] | | | |
|---|---|---|---|---|
| | *#11* | *#12* | *#13* | *#14* |
| Spirit vinegar | 0 | 0 | 0 | 3 |
| Acetic acid solution (50% w/w) | 0.44 | 0.42 | 0.41 | 0.01 |

These mayonnaises were prepared as in example 1. These mayonnaises and sources of organic acids were analysed for the attributes in the following tables:

*Table 5 Analytical parameters of combination of vinegars and acetic acid solution used in mayonnaises from Table 4.*

| Sample | Ratio organic acids other than acetic acid to total organic acids [%] | Ratio amino acids to total organic acids [%] | Absorbance at 420 nm [-] |
|---|---|---|---|
| Apple cider vinegar 1 + acetic acid solution | 6.55 | 1.77 | 0.49 |
| Apple cider vinegar 2 + acetic acid solution | 0.64 | 0.018 | 0.21 |
| Apple cider vinegar 3 + acetic acid solution | 0.88 | 0.045 | 0.06 |
| Spirit vinegar + acetic acid solution | 0.005 | 0.000 | 0.03 |

*Table 6 Concentrations of compounds in mayonnaises from Table 4.*

| Sample | Organic acids other than acetic acid [wt%] | Amino acids [wt%] | Phenolic compounds [GAE %] |
|---|---|---|---|
| Mayonnaise #11 | 0.023 | 0.0061 | 0.0046 |
| Mayonnaise #12 | 0.0021 | 0.00006 | 0.0021 |
| Mayonnaise #13 | 0.0029 | 0.00015 | 0.0012 |
| Mayonnaise #14 | 0.00003 | 0.00000 | 0.00004 |

Oxygen concentration in headspace during storage trial of mayonnaises at 50°C was determined, to see the influence of the type of vinegar (see Figure 2). Mayonnaise #14 (•, containing spirit vinegar) shows the most rapid decrease of oxygen concentration in the headspace, indicating that oxidation of oil is most rapid in this mayonnaise. The mayonnaise #11 with apple cider vinegar 1 (▲) shows the slowest decrease of oxygen concentration.

The mayonnaise containing the apple cider vinegar 1 conforming to the requirements as specified herein for the composition as well as the source of organic acids, shows a slower oxidation than the mayonnaises containing spirit vinegar or the other apple cider vinegars. This shows that not just any apple cider vinegar provides the required benefits, but that only apple cider vinegar conforming to the requirements as defined herein lead to the required result.

**Example 3 - Mayonnaises containing apple cider vinegar at different concentrations**

Mayonnaises were prepared according to the following recipes, containing apple cider vinegar 1 and acetic acid solution as sources of organic acids at different concentrations. The acetic acid solution was added, so that the compositions had the same pH (3.8).

*Table 7 Compositions of mayonnaises containing apple cider vinegar 1 at different concentrations.*

| Ingredient | Concentration [wt%] | | | | |
|---|---|---|---|---|---|
| | *#21* | *#22* | *#23* | *#24* | *#25* |
| Water | 14.62 | 15.53 | 16.43 | 16.89 | 17.34 |
| Oil (rapeseed) | 75 | 75 | 75 | 75 | 75 |
| Sugar | 1.3 | 1.3 | 1.3 | 1.3 | 1.3 |
| Salt | 1.2 | 1.2 | 1.2 | 1.2 | 1.2 |

(continued)

| Ingredient | Concentration [wt%] | | | | |
|---|---|---|---|---|---|
| | #21 | #22 | #23 | #24 | #25 |
| Egg yolk | 4.2 | 4.2 | 4.2 | 4.2 | 4.2 |
| Flavours | 0.2 | 0.2 | 0.2 | 0.2 | 0.2 |
| Apple cider vinegar 1 | 3 | 2 | 1 | 0.5 | 0 |
| Acetic acid solution (50% w/w) | 0.44 | 0.53 | 0.63 | 0.67 | 0.72 |

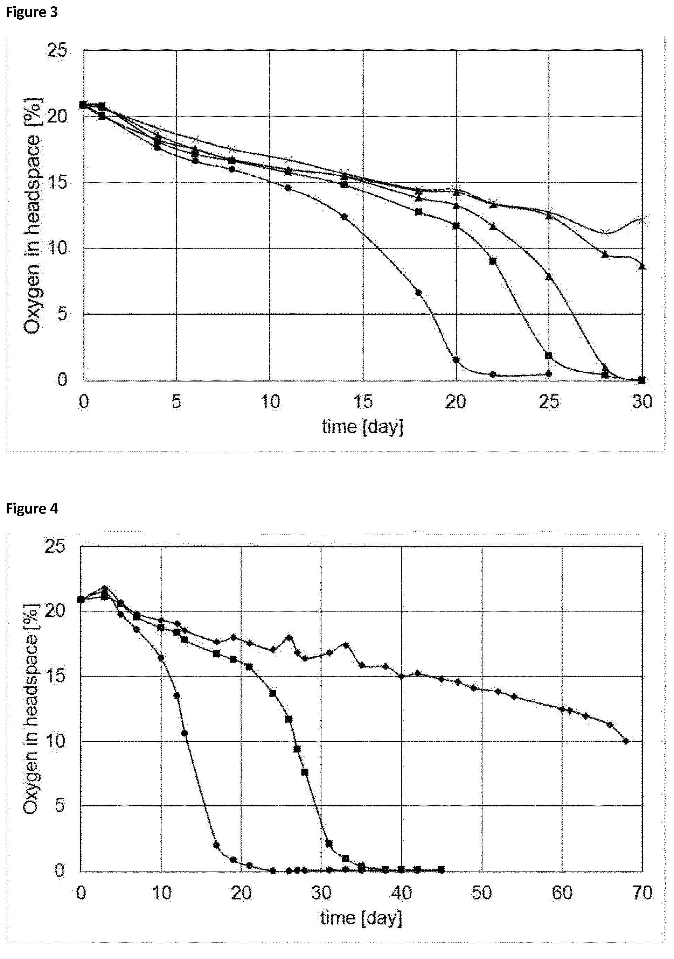

These mayonnaises were prepared as in example 1. Oxygen concentration in headspace during storage trial of these mayonnaises at 50°C was determined, to see the influence of the concentration and type of vinegar (see Figure 3). Mayonnaise #25 (•, containing acetic acid solution only) shows the most rapid decrease of oxygen concentration in the headspace, indicating that oxidation of oil is most rapid in this mayonnaise. The mayonnaise #21 with apple cider vinegar 1 (x) at the highest concentration (3%) shows the slowest decrease of oxygen concentration. A higher concentration of apple cider vinegar leads to a slower oxidation of the vegetable oil in the mayonnaises.

**Example** 4 - **Light mayonnaises containing different sources of organic acids at different concentrations**

Light mayonnaises were prepared according to the following recipes, containing different vinegars as sources of organic acids. The compositions all had the same pH of 3.5.

*Table 8 Compositions of light mayonnaises containing different vinegars.*

| Ingredient | Concentration [wt%] | | |
|---|---|---|---|
| | #31 | #32 | #33 |
| Water | 58.34 | 54.77 | 61.34 |
| Oil (rapeseed) | 22.8 | 22.8 | 22.8 |
| Sugar | 2.8 | 2.8 | 2.8 |
| Salt | 1.9 | 1.9 | 1.9 |
| Whole egg | 4.0 | 4.0 | 4.0 |
| Flavours | 0.3 | 0.3 | 0.3 |
| Cherry vinegar | 5.0 | 0.0 | 0.0 |
| Raspberry vinegar | 0.0 | 8.6 | 0.0 |
| Spirit vinegar | 0 | 0 | 2 |
| Starch | 5 | 5 | 5 |

The mayonnaises were prepared at bench scale (0.4 kg emulsion). The aqueous phase was obtained by mixing water, egg, sucrose, salt and starch. The starch was added as a 10.0% w/w aqueous suspension and subjected to thermal treatment (10 min at 90°C in a Thermomix type TM31) prior to the addition to the aqueous phase of mayonnaise. Subsequently oil was slowly added to the aqueous phase, while mixing with a high shear mixer (Silverson). The oil was added in about 10 minutes, while the mixing speed was slowly increased from about 1600 to about 7200 rpm. After the oil had been homogenised, and the emulsion had become smooth, vinegar was slowly added while the mixer was kept at 7200 rpm. The compositions had a pH of 3.5. These mayonnaises and vinegars were analysed for the attributes in the following tables:

*Table 9 Analytical parameters of vinegars used in mayonnaises from Table 8.*

| Sample | Ratio organic acids other than acetic acid to total organic acids [%] | Ratio amino acids to total organic acids [%] | Absorbance at 420 nm [-] |
|---|---|---|---|
| Cherry vinegar | 7.7 | 2.35 | 0.32 |
| Raspberry vinegar | 42.6 | 2.66 | 0.68 |

(continued)

| Sample | Ratio organic acids other than acetic acid to total organic acids [%] | Ratio amino acids to total organic acids [%] | Absorbance at 420 nm [-] |
|---|---|---|---|
| Spirit vinegar | 0.005 | 0.000 | 0.03 |

*Table 10 Concentrations of compounds in mayonnaises from Table 8.*

| Sample | Organic acids other than acetic acid [wt%] | Amino acids [wt%] | Phenolic compounds [GAE %] |
|---|---|---|---|
| Mayonnaise #31 | 0.0171 | 0.0053 | 0.0032 |
| Mayonnaise #32 | 0.0950 | 0.0059 | 0.0121 |
| Mayonnaise #33 | 0.0000 | 0.0000 | 0.00002 |

Oxygen concentration in headspace during storage trial of these mayonnaises at 50°C was determined, to see the influence of the type of vinegar (see Figure 4). Mayonnaise #33 (•, containing spirit vinegar) shows the most rapid decrease of oxygen concentration in the headspace, indicating that oxidation of oil is most rapid in this mayonnaise. The mayonnaise #32 with raspberry vinegar shows the slowest decrease of oxygen concentration. This example shows that also light mayonnaises shows rapid oxidation of the vegetable oil. The mayonnaise containing spirit vinegar shows an oxidation rate which is about the same as the (high oil) mayonnaises from examples 1, 2, and 3 containing only spirit vinegar or acetic acid solution as source of organic acids.

**Example** 5 - **Mayonnaises without egg yolk containing different vinegars**

Mayonnaises were prepared without egg yolk according to the following recipes, containing different vinegars as sources of organic acids. The compositions had the same pH (2.5).

*Table 11 Compositions of light mayonnaises containing different vinegars.*

| Ingredient | Concentration [wt%] | |
|---|---|---|
| | #41 | #42 |
| Water | 10.61 | 15.21 |
| Oil (rapeseed) | 77.5 | 77.5 |
| Sugar | 2.7 | 2.7 |
| Salt | 2.2 | 2.2 |
| N-creamer | 0.9 | 0.9 |
| Flavours | 0.1 | 0.1 |
| Raspberry vinegar | 6 | 0 |
| Spirit vinegar | 0 | 1.4 |

The mayonnaises were prepared at bench scale (0.4 kg emulsion). The aqueous phase was obtained by mixing water, emulsifier (N-creamer), sucrose, salt and vinegar. Subsequently oil was slowly added to the aqueous phase, while mixing with a high shear mixer (Silverson). The oil was added in about 10 minutes, while the mixing speed was slowly increased from about 1600 to about 7200 rpm and kept to such speed until the emulsion had become homogeneous and smooth. The compositions had a pH of 2.5. These mayonnaises were analysed for the attributes in the following tables (for vinegars see Table 9).

*Table 12 Concentrations of compounds in mayonnaises from Table 11.*

| Sample | Organic acids other than acetic acid [wt%] | Amino acids [wt%] | Phenolic compounds [GAE %] |
|---|---|---|---|
| Mayonnaise #41 | 0.0663 | 0.0041 | 0.0084 |
| Mayonnaise #42 | 0.0000 | 0.0000 | 0.00002 |

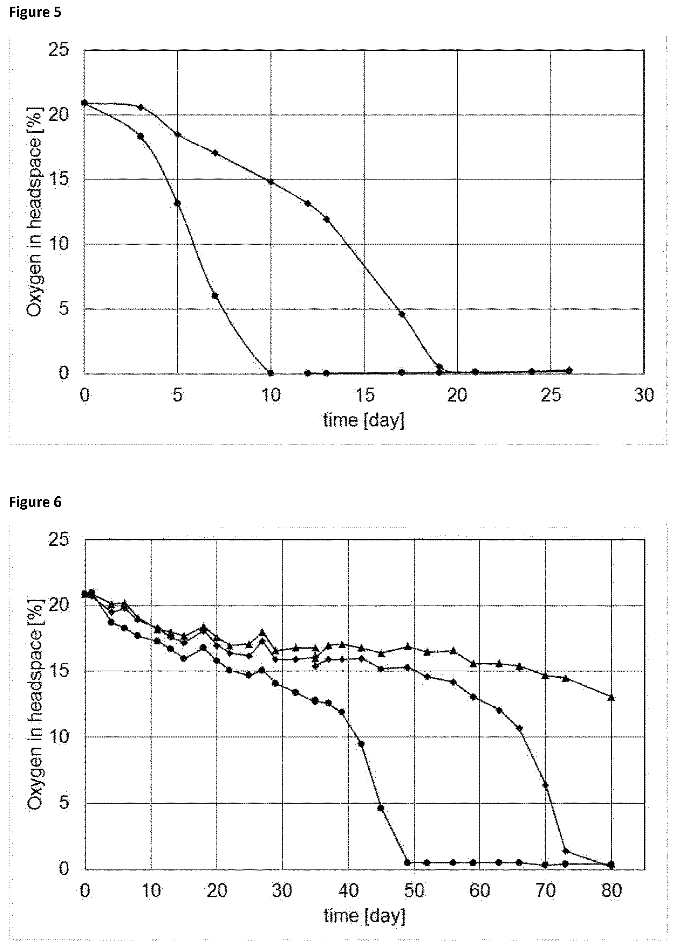

Oxygen concentration in headspace during storage trial of these mayonnaises at 50°C was determined, to see the influence of type of vinegar (see Figure 5). Mayonnaise #42 (•, containing spirit vinegar) shows the most rapid decrease of oxygen concentration in the headspace, indicating that oxidation of oil is most rapid in this mayonnaise. The mayonnaise #41 with raspberry vinegar shows the slowest decrease of oxygen concentration. This example shows that also mayonnaises without egg yolk show rapid oxidation of the vegetable oil. This means that the oxidation of the oil is not solely promoted by the presence of iron ions naturally present in egg yolk. Also the mayonnaise containing N-creamer as emulsifier shows oxidation, which can be substantially delayed using a source of organic acids having properties according to the invention.

**Example 6 - Mayonnaises containing plum vinegar and/or mustard bran**

Mayonnaises were prepared according to the following recipes, containing plum vinegar and/or spirit vinegar as source of organic acids and/or mustard bran. The compositions had the same pH (3.8).

*Table 13 Compositions of light mayonnaises containing different vinegars and mustard bran*

| Ingredient | Concentration [wt%] | | |
|---|---|---|---|
| | #51 | #52 | #53 |
| Water | 22.59 | 13.59 | 15.37 |
| Oil (rapeseed) | 65 | 75 | 75 |
| Sugar | 1.3 | 1.3 | 1.3 |
| Salt | 1.2 | 1.2 | 1.2 |
| Egg yolk | 4.2 | 4.2 | 4.2 |
| Flavours | 0.3 | 0.3 | 0.3 |
| Plum vinegar | 3.0 | 3.0 | 0.0 |
| Spirit vinegar | 1.4 | 1.4 | 2.6 |
| Yellow mustard bran | 1 | 0 | 0 |

These mayonnaises were basically prepared as in example 1. The mustard bran was treated by dispersing it in water and heating for 10 minutes at 90°C, subsequently was cooled, and mixed with the aqueous phase of the emulsion. The compositions had a pH of 3.8. These mayonnaises and vinegars were analysed for the attributes in the following tables:

*Table 14 Analytical parameters of sources of organic acids used in mayonnaises from Table 13.*

| Sample | Ratio organic acids other than acetic acid to total organic acids [%] | Ratio amino acids to total organic acids [%] | Absorbance at 420 nm [-] |
|---|---|---|---|
| Plum vinegar + Spirit vinegar | 1.96 | 0.12 | 0.29 |
| Spirit vinegar | 0.005 | 0.000 | 0.03 |

*Table 15 Concentrations of compounds in mayonnaises from Table 13.*

| Sample | Organic acids other than acetic acid [wt%] | Amino acids [wt%] | Phenolic compounds [GAE %] |
|---|---|---|---|
| Mayonnaise #51 & #52 | 0.0065 | 0.0004 | 0.0016 |
| Mayonnaise #53 | 0.0000 | 0.0000 | 0.00002 |

Oxygen concentration in headspace during storage trial of these mayonnaises at 50°C was determined, to see the influence of type of vinegar and mustard bran (see Figure 6). Mayonnaise #53 (•, containing spirit vinegar) shows the most rapid decrease of oxygen concentration in the headspace, indicating that oxidation of oil is most rapid in this mayonnaise. Oxidation decreases when using plum vinegar in the mayonnaise #52 (+), without mustard bran. Least oxidation is obtained for the mayonnaise #51 (x) with mustard bran and plum vinegar.

**Example 7 - Mayonnaises containing plum vinegar and/or different mustard brans**

Mayonnaises were prepared according to the following recipes, containing plum vinegar and/or spirit vinegar as source of organic acids and different mustard brans. The compositions had the same pH (3.8).

*Table 16 Compositions of mayonnaises containing different vinegars.*

| Ingredient | Concentration [wt%] | | | |
|---|---|---|---|---|
| | #61 | #62 | #63 | #64 |
| Water | 15.37 | 22.59 | 22.59 | 22.59 |
| Oil (rapeseed) | 75 | 65 | 65 | 65 |
| Sugar | 1.3 | 1.3 | 1.3 | 1.3 |
| Salt | 1.2 | 1.2 | 1.2 | 1.2 |
| Egg yolk | 4.2 | 4.2 | 4.2 | 4.2 |
| Flavours | 0.3 | 0.3 | 0.3 | 0.3 |
| Plum vinegar | 0 | 3 | 3 | 3 |
| Spirit vinegar | 2.6 | 1.4 | 1.4 | 1.4 |
| Yellow mustard bran | 0 | 1 | 0 | 0 |
| Oriental mustard bran | 0 | 0 | 1 | 0 |
| Yellow mustard bran mucilage | 0 | 0 | 0 | 1 |

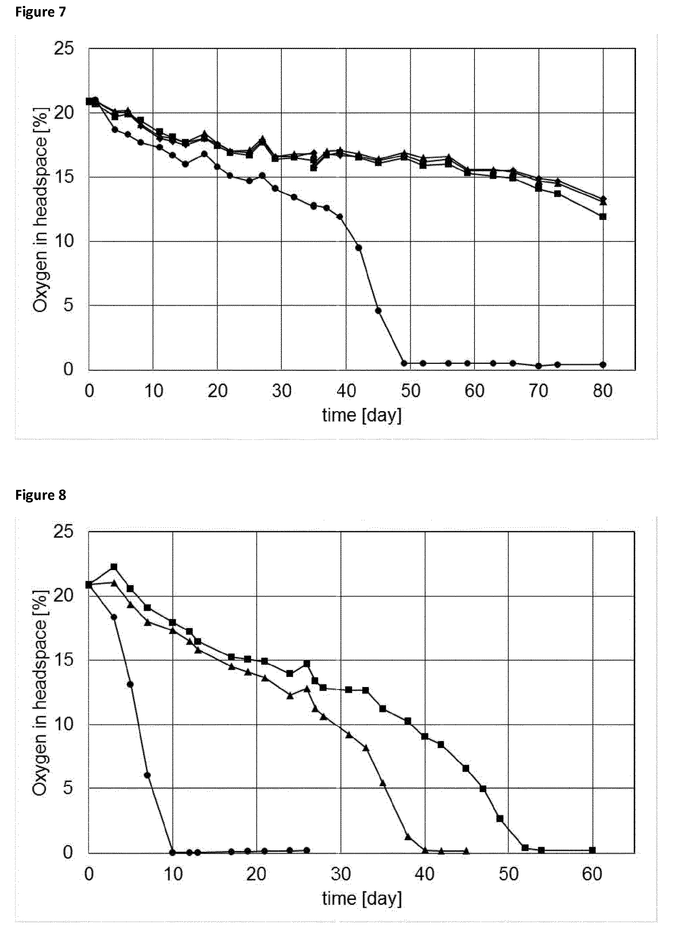

These mayonnaises were prepared basically as in example 6. The compositions had a pH of 3.8. The analyses of these sources of organic acids is provided in Table 14. Oxygen concentration in headspace during storage trial of these mayonnaises at 50°C was determined, to see the influence of type of vinegar and mustard bran (see Figure 7). Mayonnaise #61 (•, containing spirit vinegar) shows the most rapid decrease of oxygen concentration in the headspace, indicating that oxidation of oil is most rapid in this mayonnaise. The other three mayonnaises containing plum vinegar and the various types of mustard bran, showed a strongly decreased oxidation, without much difference between the various mustard brans.

**Example 8 - Mayonnaises containing different sources of organic acids and/or yellow mustard bran**

Mayonnaises were prepared according to the following recipes, containing different vinegars as sources of organic acids and/or yellow mustard brans, and using a modified starch as emulsifier, instead of egg yolk. The compositions had the same pH (3.5).

*Table 17 Compositions of mayonnaises containing different vinegars.*

| Ingredient | Concentration [wt%] | | |
|---|---|---|---|
| | #71 | #72 | #73 |
| Water | 15.21 | 24.61 | 22.11 |
| Oil (rapeseed) | 77.5 | 65 | 65 |
| Sugar | 2.7 | 2.7 | 2.7 |
| Salt | 2.2 | 2.2 | 2.2 |
| N-creamer | 0.9 | 0.9 | 0.9 |
| Flavours | 0.1 | 0.1 | 0.1 |
| Cherry vinegar | 0 | 3.5 | 0 |
| Raspberry vinegar | 0 | 0 | 6 |

(continued)

| Ingredient | Concentration [wt%] | | |
|---|---|---|---|
| | #71 | #72 | #73 |
| Spirit vinegar | 1.4 | 0 | 0 |
| Yellow mustard bran | 0 | 1 | 1 |

These mayonnaises were prepared as described in examples 5 and 6. The compositions had a pH of 3.5. These mayonnaises were analysed for the attributes in the following table (for vinegars see Table 9).

*Table 18 Concentrations of compounds in mayonnaises from Table 17.*

| Sample | Organic acids other than acetic acid [wt%] | Amino acids [wt%] | Phenolic compounds [GAE %] |
|---|---|---|---|
| Mayonnaise #71 | 0.0000 | 0.0000 | 0.00002 |
| Mayonnaise #72 | 0.0120 | 0.0037 | 0.0022 |
| Mayonnaise #73 | 0.0663 | 0.0041 | 0.0084 |

Oxygen concentration in headspace during storage trial of these mayonnaises at 50°C was determined, to see the influence of type of vinegar and yellow mustard bran (see Figure 8). Mayonnaise #71 (•, containing spirit vinegar) shows the most rapid decrease of oxygen concentration in the headspace, indicating that oxidation of oil is most rapid in this mayonnaise. The use of cherry vinegar in combination with yellow mustard bran (#72, ▲), and raspberry vinegar in combination with yellow mustard bran (#73, ▪) leads to strongly decreased oxidation, with raspberry vinegar as the best performing vinegar with regard to decrease of oxidation.

**Claims**

1.  A process for manufacturing a composition comprising water, a source of organic acids and vegetable oil, the vegetable oil comprising mono-unsaturated and/or poly-unsaturated fatty acids, the organic acids comprising acetic acid and one or more organic acids other than acetic acids; the process comprising:

    (i) selecting the source of organic acids such that:

    the weight ratio of one or more organic acids other than acetic acid to total organic acids in the source of organic acids ranges from 0.5% to 60%,
    the weight ratio of one or more amino acids to total organic acids in the source of organic acid ranges from 0.05% to 20%, and
    the source of organic acid has an absorbance at a wavelength of 420 nm ranging from 0.01 to 3,

    wherein the source of organic acids does not originate from grape, and
    wherein the source of organic acids comprises one or more vinegars selected from cherry vinegar, plum vinegar, tomato vinegar, apricot vinegar, apple cider vinegar, mango vinegar, raspberry vinegar, and pear vinegar; and

    (ii) providing the composition in the form of an oil-in-water emulsion, through high-shear emulsification sufficient to provide the oil droplets in the emulsion with a surface weighted mean diameter D3.2 of less than 20 micrometre; and
    wherein the concentration of the vegetable oil ranges from 5% to 85% by weight of the composition;
    wherein the composition has a total titratable acidity ranging from 0.03% to 3% by weight expressed as acetic acid;
    wherein the composition comprises one or more organic acids other than acetic acid at a concentration ranging from 0.0007% to 0.7% by weight;
    wherein the composition has a pH ranging from 2.5 to 5;
    wherein the composition comprises one or more amino acids at a concentration ranging from 0.0001% to 0.3% by weight of the composition;

wherein the composition comprises one or more phenolic compounds at a concentration ranging from 0.00007% to 0.5% by weight of the composition expressed as gallic acid equivalents;

wherein quantitative analysis of organic acids and amino acids is carried out spectroscopically as set forth in the description,

wherein gallic acid equivalents is determined using the Folin-Ciocalteu assay as set forth in the description;

wherein absorbance at 420 nm is determined using UV-vis analysis as set forth in the description; and

with D3,2 defined as referred to in the description.

2. A process according to claim 1, wherein the source of organic acids comprises acetic acid and additionally one or more organic acids selected from citric acid, malic acid, lactic acid, and succinic acid.

3. A process according to any of claims 1 or 2, wherein the resulting composition comprises one or more organic acids other than acetic acid at a concentration ranging from 0.0011% to 0.65% by weight of the composition.

4. A process according to any of claims 1 to 3, wherein the resulting composition comprises one or more amino acids at a concentration ranging from 0.0005% to 0.2% by weight of the composition.

5. A process according to any of claims 1 to 4, wherein the resulting composition comprises one or more phenolic compounds at a concentration ranging from 0.00015% to 0.07% by weight expressed as gallic acid equivalents.

6. A process according to any of claims 1 to 5, wherein the concentration of EDTA is lower than 0.007% by weight, preferably lower than 0.005% by weight, preferably lower than 0.002% by weight of the composition, preferably EDTA is absent from the resulting composition.

7. A process according to any of claims 1 to 6, wherein the resulting composition comprises mustard seed bran, preferably at a concentration ranging from 0.05% to 4% by weight of the composition.

8. A process according to any of claims 1 to 7, wherein the weight ratio of one or more organic acids other than acetic acid to total organic acids in the source of organic acids ranges from 1% to 30%.

9. A process according to any of claims 1 to 8, wherein the source of organic acids comprises citric acid and malic acid and the weight ratio between citric acid and malic acid to total organic acids in the source of organic acids ranges from 0.2% to 50%.

10. A process according to any of claims 1 to 9, wherein the weight ratio of one or more amino acids to total organic acids in the source of organic acid ranges from 0.2% to 18%, preferably from 0.5% to 15%.

11. A process according to any of claims 1 to 10, wherein the weight ratio of asparagine to total organic acids in the source of organic acid ranges from 0.2% to 10%.

12. A process according to any of claims 1 to 11, wherein the source of organic acids has an absorbance at a wavelength of 280 nm ranging from 1 to 3.

**Patentansprüche**

1. Verfahren zur Herstellung einer Zusammensetzung, die Wasser, eine Quelle organischer Säuren und Pflanzenöl umfasst, wobei das Pflanzenöl einfach ungesättigte und/oder mehrfach ungesättigte Fettsäuren umfasst, die organischen Säuren Essigsäure und eine oder mehrere andere organische Säuren als Essigsäure umfassen, wobei das Verfahren umfasst:

(i) Auswählen der Quelle organischer Säuren, so dass:

das Gewichtsverhältnis einer oder mehrerer anderer organischer Säuren als Essigsäure zu den gesamten organischen Säuren in der Quelle organischer Säuren zwischen 0,5% und 60% liegt,

das Gewichtsverhältnis einer oder mehrerer Aminosäuren zu den gesamten organischen Säuren in der Quelle organischer Säuren zwischen 0,05% und 20% liegt und

die Quelle organischer Säuren eine Absorption bei einer Wellenlänge von 420 nm zwischen 0,01 und 3 aufweist,

wobei die Quelle organischer Säuren nicht aus Trauben stammt und

wobei die Quelle organischer Säuren eine oder mehrere Essigsorten umfasst, ausgewählt unter Kirschessig, Pflaumenessig, Tomatenessig, Aprikosenessig, Apfelwein, Essig, Mangoessig, Himbeeressig und Birnenessig; und

(ii) Bereitstellen der Zusammensetzung in Form einer Öl-in-Wasser-Emulsion durch eine Emulgierung mit hoher Scherung, die ausreicht, um den Öltröpfchen in der Emulsion einen oberflächengewichteten mittleren Durchmesser D3,2 von weniger als 20 Mikrometern zu verleihen; und

wobei die Konzentration des Pflanzenöls zwischen 5 und 85 Gewichtsprozent der Zusammensetzung liegt;

wobei die Zusammensetzung eine titrierbare Gesamtsäure zwischen 0,03 und 3 Gewichtsprozent, ausgedrückt als Essigsäure, aufweist;

wobei die Zusammensetzung eine oder mehrere andere organische Säuren als Essigsäure in einer Konzentration zwischen 0,0007 und 0,7 Gewichtsprozent umfasst;

wobei die Zusammensetzung einen pH-Wert zwischen 2,5 und 5 aufweist;

wobei die Zusammensetzung eine oder mehrere Aminosäuren in einer Konzentration zwischen 0,0001 und 0,3 Gewichtsprozent der Zusammensetzung umfasst;

wobei die Zusammensetzung eine oder mehrere Phenolverbindungen in einer Konzentration zwischen 0,00007 und 0,5 Gewichtsprozent der Zusammensetzung, ausgedrückt als Gallussäureäquivalente, umfasst;

wobei die quantitative Analyse der organischen Säuren und Aminosäuren spektroskopisch gemäß der Beschreibung durchgeführt wird,

wobei Gallussäureäquivalente unter Anwendung des Folin-Ciocalteu-Tests gemäß der Beschreibung bestimmt werden; und

wobei die Absorption bei 420 mm unter Anwendung einer UV-Vis-Analyse gemäß der Beschreibung bestimmt wird und wobei D3,2, wie in der Beschreibung angegeben, definiert ist.

2. Verfahren nach Anspruch 1, wobei die Quelle organischer Säuren Essigsäure und zusätzlich eine oder mehrere organische Säuren, ausgewählt unter Zitronensäure, Apfelsäure, Milchsäure und Bernsteinsäure, umfasst.

3. Verfahren nach einem der Ansprüche 1 oder 2, wobei die resultierende Zusammensetzung eine oder mehrere andere organische Säuren als Essigsäure in einer Konzentration zwischen 0,0011 und 0,65 Gewichtsprozent der Zusammensetzung umfasst.

4. Verfahren nach einem der Ansprüche 1 bis 3, wobei die resultierende Zusammensetzung eine oder mehrere Aminosäuren in einer Konzentration zwischen 0,0005 und 0,2 Gewichtsprozent der Zusammensetzung umfasst.

5. Verfahren nach einem der Ansprüche 1 bis 4, wobei die resultierende Zusammensetzung eine oder mehrere Phenolverbindungen in einer Konzentration zwischen 0,00015 und 0,070 Gewichtsprozent, ausgedrückt als Gallussäureäquivalente, umfasst.

6. Verfahren nach einem der Ansprüche 1 bis 5, wobei die Konzentration von EDTA weniger als 0,007 Gewichtsprozent, vorzugsweise weniger als 0,005 Gewichtsprozent, vorzugsweise weniger als 0,002 Gewichtsprozent der Zusammensetzung beträgt, wobei EDTA in der resultierenden Zusammensetzung vorzugsweise nicht enthalten ist.

7. Verfahren nach einem der Ansprüche 1 bis 6, wobei die resultierende Zusammensetzung Senfkörnerkleie umfasst, vorzugsweise in einer Konzentration zwischen 0,05 und 4 Gewichtsprozent der Zusammensetzung.

8. Verfahren nach einem der Ansprüche 1 bis 7, wobei das Gewichtsverhältnis einer oder mehrerer anderer organischer Säuren als Essigsäure zu den gesamten organischen Säuren in der Quelle organischer Säuren zwischen 1% und 30% liegt.

9. Verfahren nach einem der Ansprüche 1 bis 8, wobei die Quelle organischer Säuren Zitronensäure und Apfelsäure umfasst und das Gewichtsverhältnis von Zitronensäure und Apfelsäure zu den gesamten organischen Säuren in der Quelle organischer Säuren zwischen 0,2% und 50% liegt.

10. Verfahren nach einem der Ansprüche 1 bis 9, wobei das Gewichtsverhältnis einer oder mehrerer Aminosäuren zu den gesamten organischen Säuren in der Quelle organischer Säuren zwischen 0,2% und 18%, vorzugsweise zwischen 0,5% und 15%, liegt.

**11.** Verfahren nach einem der Ansprüche 1 bis 10, wobei das Gewichtsverhältnis von Asparagin zu den gesamten organischen Säuren in der Quelle organischer Säuren zwischen 0,2% und 10% liegt.

**12.** Verfahren nach einem der Ansprüche 1 bis 11, wobei die Quelle organischer Säuren eine Absorption bei einer Wellenlänge von 280 nm zwischen 1 und 3 aufweist.

**Revendications**

**1.** Procédé pour fabriquer une composition comprenant de l'eau, une source d'acides organiques, et de l'huile végétale, l'huile végétale comprenant des acides gras monoinsaturés et/ou polyinsaturés, les acides organiques comprenant l'acide acétique et un ou plusieurs acides organiques autres que l'acide acétique ; le procédé comprenant :

(i) la sélection de la source d'acides organiques de façon que :

le rapport en poids d'un ou plusieurs acides organiques autres que l'acide acétique aux acides organiques totaux dans la source d'acides organiques soit situé dans la plage allant de 0,5 % à 60 %,
le rapport en poids d'un ou plusieurs acides aminés aux acides organiques totaux dans la source d'acides organiques soit situé dans la plage allant de 0,05 % à 20 %, et
la source d'acides organiques ait une absorbance à une longueur d'onde de 420 nm située dans la plage allant de 0,01 à 3,
dans laquelle la source d'acides organiques ne provient pas de raisin, et
dans laquelle la source d'acides organiques comprend un ou plusieurs vinaigres choisis parmi le vinaigre de cerise, le vinaigre de prune, le vinaigre de tomate, le vinaigre d'abricot, le vinaigre de cidre de pomme, le vinaigre de mangue, le vinaigre de framboise, et le vinaigre de poire ;

et
(ii) la fourniture de la composition sous la forme d'une émulsion huile dans l'eau, par l'intermédiaire d'une émulsification sous fort cisaillement suffisante pour doter les gouttelettes d'huile dans l'émulsion d'un diamètre moyen pondéré en surface D3.2 inférieur à 20 micromètres ; et

dans lequel la concentration de l'huile végétale est située dans la plage allant de 5 % à 85 % en poids de la composition ;
dans lequel la composition a une acidité titrable totale située dans la plage allant de 0,03 % à 3 % en poids, exprimée sous forme d'acide acétique ;
dans lequel la composition comprend un ou plusieurs acides organiques autres que l'acide acétique à une concentration située dans la plage allant de 0,0007 % à 0,7 % en poids ;
dans lequel la composition a un pH situé dans la plage allant de 2,5 à 5 ;
dans lequel la composition comprend un ou plusieurs acides aminés à une concentration située dans la plage allant de 0,0001 % à 0,3 % en poids de la composition ;
dans lequel la composition comprend un ou plusieurs composés phénoliques à une concentration située dans la plage allant de 0,00007 % à 0,5 % en poids de la composition, exprimée sous forme d'équivalents d'acide gallique ;
dans lequel l'analyse quantitative des acides organiques et des acides aminés est effectuée par voie spectroscopique comme indiqué dans la description ;
dans lequel les équivalents d'acide gallique sont déterminés par utilisation du dosage de Folin-Ciocalteu comme indiqué dans la description ;
dans lequel l'absorbance à 420 nm est déterminée par utilisation d'une analyse UV-visible comme indiqué dans la description ; et
dans laquelle le D3.2 est défini comme indiqué dans la description.

**2.** Procédé selon la revendication 1, dans lequel la source d'acides organiques comprend de l'acide acétique et de plus un ou plusieurs acides organiques choisis parmi l'acide citrique, l'acide malique, l'acide lactique et l'acide succinique.

**3.** Procédé selon la revendication 1 ou 2, dans lequel la composition résultante comprend un ou plusieurs acides

**EP 3 684 188 B1**

organiques autres que l'acide acétique à une concentration située dans la plage allant de 0,0011 % à 0,65 % en poids de la composition.

4. Procédé selon l'une quelconque des revendications 1 à 3, dans lequel la composition résultante comprend un ou plusieurs acides aminés à une concentration située dans la plage allant de 0,0005 % à 0,2 % en poids de la composition.

5. Procédé selon l'une quelconque des revendications 1 à 4, dans lequel la composition résultante comprend un ou plusieurs composés phénoliques à une concentration située dans la plage allant de 0,00015 % à 0,07 % en poids, exprimée sous la forme d'équivalents d'acide gallique.

6. Procédé selon l'une quelconque des revendications 1 à 5, dans lequel la concentration d'EDTA est inférieure à 0,007 % en poids, de préférence inférieure à 0,005 % en poids, de préférence inférieure à 0,002 % en poids de la composition, de préférence l'EDTA est absent de la composition résultante.

7. Procédé selon l'une quelconque des revendications 1 à 6, dans lequel la composition résultante comprend du son de graines de moutarde, de préférence à une concentration située dans la plage allant de 0,05 % à 4 % en poids de la composition.

8. Procédé selon l'une quelconque des revendications 1 à 7, dans lequel le rapport en poids d'un ou plusieurs acides organiques autres que l'acide acétique aux acides organiques totaux dans la source d'acides organiques est situé dans la plage allant de 1 % à 30 %.

9. Procédé selon l'une quelconque des revendications 1 à 8, dans lequel la source d'acides organiques comprend de l'acide citrique et de l'acide malique, et le rapport en poids de l'acide citrique et de l'acide malique aux acides organiques totaux dans la source d'acides organiques est situé dans la plage allant de 0,2 % à 50 %.

10. Procédé selon l'une quelconque des revendications 1 à 9, dans lequel le rapport en poids d'un ou plusieurs acides aminés aux acides organiques totaux dans la source d'acides organiques est situé dans la plage allant de 0,2 % à 18 %, de préférence de 0,5 % à 15 %.

11. Procédé selon l'une quelconque des revendications 1 à 10, dans lequel le rapport en poids de l'asparagine aux acides organiques totaux dans la source d'acides organiques est situé dans la plage allant de 0,2 % à 10 %.

12. Procédé selon l'une quelconque des revendications 1 à 11, dans lequel la source d'acides organiques a une absorbance à une longueur d'onde de 280 nm située dans la plage allant de 1 à 3.

**Figure 1**

**Figure 2**

**Figure 3**

**Figure 4**

**Figure 5**

**Figure 6**

**Figure 7**

**Figure 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013189709 A1
- WO 2017001154 A1
- WO 2007096444 A1
- EP 1336340 A1
- JP 2004073043 A
- CN 101708062

### Non-patent literature cited in the description

- **D. TAGLIAZUCCHI et al.** *European Food Research and Technology*, 2008, vol. 227 (3), 835-843
- **V.L. SINGLETON et al.** Analysis of total phenols and other oxidation substrates and antioxidants by means of Folin-Ciocalteu reagent. *Methods in Enzymology*, 1999, vol. 299, 152-178
- **M. ALDERLIESTEN**. *Particle & Particle Systems Characterization*, 1991, vol. 8, 237-241